# EUROPÄISCHE PATENTANMELDUNG

(11) **EP 1 903 270 A2**
(43) Veröffentlichungstag der Anmeldung: **26.03.2008**
(21) Anmeldenummer: 07113334.2
(22) Anmeldetag: 27.07.2007
(51) Int. Cl.: F16L 23/024

(54) **Vorrichtung zum Verbinden eines Rohres mit einem weiteren Bauteil**

(30) Priorität: 21.09.2006 DE 102006044429
(71) Anmelder: ROBERT BOSCH GMBH, 70442 Stuttgart (DE)
(72) Erfinder: Erinkurt, Buelent, 71701, Schwieberdingen (DE)

(57) **Zusammenfassung**

Die Erfindung betrifft eine Vorrichtung zum Verbinden eines Rohres (3) mit einem weiteren Bauteil, wobei am Rohrende (5) ein Flansch vorgesehen ist, der zur Abstützung eines Überwurfelementes dient, welches mit dem weiteren Bauteil kraft- oder formschlüssig verbunden werden kann. Der Flansch ist als Bund (7) eines Einsatzteiles (1) ausgebildet, welches in das Rohr (3) eingesetzt wird und mit dem Rohr (3) kraft- oder formschlüssig verbunden wird.

## Beschreibung

### Stand der Technik

Die Erfindung betrifft eine Vorrichtung zum Verbinden eines Rohres mit einem weiteren Bauteil gemäß dem Oberbegriff des Anspruchs 1.

Zur Realisierung flüssigkeits- oder gasdichter Rohrverbindungen werden Rohrenden im Allgemeinen mit einem Flansch versehen. Dieser dient zur Abstützung eines Überwurfelementes, beispielsweise einer Überwurfmutter, mit der das Rohrende in einem weiteren Bauteil, zum Beispiel einem weiteren Rohr befestigt wird und gegebenenfalls zur Bildung und Begrenzung eines Dichtringraumes.

Derartige Rohrflansche werden derzeit im Allgemeinen durch aufwendige Kaltumformprozesse, wie z.B. Taumelnieten gefertigt. Hierbei wird die Rohrwand zum Flansch aufgeweitet. Da lediglich die Rohrwand aufgeweitet und umgebördelt wird, ist die Flanschgeometrie nicht frei definierbar. Auch ist es nicht möglich, durch den Kaltumformprozess geringe Toleranzen zu realisieren. Ein weiterer Nachteil des Kaltumformprozesses zur Herstellung des Flansches am Rohrende ist eine geringe Oberflächengüte. Zudem führt die durch die Umformung hervorgerufene Kaltverfestigung dazu, dass das Rohr zur Rissbildung neigt.

### Offenbarung der Erfindung

### Vorteile der Erfindung

Bei einer erfindungsgemäß ausgebildeten Vorrichtung zum Verbinden eines Rohres mit einem weiteren Bauteil ist am Rohrende ein Flansch vorgesehen, der zur Abstützung eines Überwurfelementes dient, welches mit dem weiteren Bauteil kraft- oder formschlüssig verbunden werden kann. Erfindungsgemäß ist der Flansch als Bund eines Einsatzteiles ausgebildet, welches in das Rohr eingesetzt wird und mit dem Rohr kraft- oder formschlüssig verbunden wird.

Ein geeignetes Überwurfelement ist zum Beispiel eine Überwurfmutter oder eine Spannhülse, welche mit einem Außengewinde an dem weiteren Bauteil verschraubt wird.

Primärer Vorteil des erfindungsgemäßen Einsatzteiles, das als Flansch dient, ist, dass dieses mit beliebig definierbarer Außen- und Innengeometrie ausgebildet werden kann. Durch entsprechende Fertigungsprozesse, die dem Fachmann geläufig sind, lässt sich das Einsatzteil mit einer geringen Fertigungstoleranz herstellen. Weiterhin wird hierdurch gewährleistet, dass die Oberfläche und Geometrie des Rohrendes, welche für die Aufnahme des Dichtringes zur Gewährleistung einer flüssigkeitsdichten oder gasdichten Verbindung wesentlich ist, in einer hohen Güte erhalten bleibt, da an dieser Stelle keine Kaltumformung durchgeführt werden muss.

In einer bevorzugten Ausführungsform ist im Einsatzteil ein Kanal ausgebildet, der von einer fließfähigen Substanz durchströmt werden kann. Der Kanal kann dabei mit einer beliebigen Innengeometrie ausgebildet sein. Alternativ ist es jedoch auch möglich, das Einsatzteil ohne einen Kanal zu fertigen, um das Rohr an dem Rohrende, in das das Einsatzteil eingesetzt ist, zu verschließen.

Die fließfähige Substanz, die das Rohr durchströmt, ist im Sinne der vorliegenden Erfindung ein fließfähiges Pulver oder Granulat, eine Flüssigkeit oder ein Gas, vorzugsweise ein Gas oder eine Flüssigkeit, insbesondere eine Flüssigkeit.

Um eine flüssigkeits- oder gasdichte Verbindung des Rohres mit dem Bauteil zu erhalten, wird durch den am erfindungsgemäß ausgebildeten Einsatzteil ausgebildeten Flansch vorzugsweise ein Raum für einen Dichtring gebildet und begrenzt und der Dichtring an seiner Position gehalten.

Die Innengeometrie des Kanals im Einsatzteil kann z.B. so ausgeführt sein, dass diese zumindest ein Drosselelement, eine Blende und/oder einen Diffusor umfasst. Hierdurch lässt sich auf einfache Weise im Bereich des Rohrendes, an dem das Einsatzteil in das Rohr eingesetzt ist, eine Strömungsbeeinflussung erzielen.

Abhängig vom gewünschten Strömungsverhalten ist es möglich, die Innengeometrie des Kanals im Einsatzteil als ein Drosselelement, eine Blende oder einem Diffusor auszuführen. Auch ist es möglich, dass die Innengeometrie in Form mehrerer Drosselelemente, mehrerer Blenden oder mehrerer Diffusoren ausgeführt ist oder es ist auch möglich, Drosselelemente, Blenden und Diffusoren in beliebiger Anzahl in der Innengeometrie des Kanals zu kombinieren. Üblicherweise wird die Innengeometrie jedoch als ein Drosselelement, eine Blende oder ein Diffusor ausgebildet sein.

Um geringe Fertigungstoleranzen und damit eine hohe Maßhaltigkeit des Einsatzteiles zu realisieren, wird das Einsatzteil vorzugsweise durch ein spanendes Fertigungsverfahren hergestellt. Bei einem rotationssymmetrischen Einsatzteil wird das Einsatzteil vorzugsweise durch ein Drehverfahren produziert. Alternativ ist es jedoch auch möglich, das Einsatzteil z.B. durch Fräsen zu bearbeiten. Der Kanal im Einsatzteil wird vorzugsweise durch Drehen oder Bohren hergestellt. Um eine hohe Oberflächengüte, d.h. eine geringe Rauhigkeit, des Kanals zu erzielen, kann dieser z.B. gehont oder gerieben werden. In Abhängigkeit von den Genauigkeits- und Festigkeitsanfordungen an das erfindungsgemäße Einsatzteil kann jedes beliebige geeignete, dem Fachmann bekannte Fertigungsverfahren und jeder beliebige geeignete, dem Fachmann bekannte Werkstoff eingesetzt werden.

Die Fixierung des Einsatzteiles im Rohr erfolgt z.B. durch eine Pressverbindung, eine Klebverbindung, eine Schweißverbindung, eine Lötverbindung, eine Schraubverbindung, einen Kaltumformprozess oder eine Kombination von zwei oder mehreren der Verbindungsarten. Durch die Fixierung des Einsatzteiles im Rohr wird vermieden, dass dieses nach der Montage des Rohres mit dem weiteren Bauteil aus dem Rohr gezogen werden kann und so die Verbindung gelöst wird.

Wenn das Einsatzteil durch einen Kaltumformprozess im Rohr fixiert wird, ist vorzugsweise am Außenumfang des Einsatzteiles eine Nut ausgebildet, in die die Wandung des Rohres durch den Kaltumformprozess eingepresst wird. Das Einpressen der Wandung des Rohres in die Nut am Außenumfang des Einsatzteiles erfolgt z.B. durch Einrollen, Rundkneten oder Einstichhämmern. Vorteil des Kaltumformprozesses zur Befestigung des Einsatzteiles im Rohr ist, dass auf diese Weise eine maßgenaue Positionierung möglich ist. Auch ist es möglich, die Position der Kaltumformung und der Nut so aufeinander abzustimmen, dass eine Vorspannung des Einsatzteiles im Rohr erfolgt. Abhängig von den Anforderungen an die Fixierung, die Geometrie, die Festigkeit und die Dichtheit kann die Außengeometrie des Einsatzteiles angepasst und die Kaltumformung des Rohres verändert werden.

In einer Ausführungsform ist das Rohr von einer Kunststoffummantelung umgeben, welche meist im funktionalen Zusammenhang oder als Verbindungsgeometrie zu anderen Schnittstellen steht. Die Kunststoffummantelung ist dabei so ausgeführt, dass zwischen der Kunststoffummantelung und dem Flansch eine Nut ausgebildet wird, in der der Dichtring aufgenommen ist. Durch das Ausbilden der Nut wird vermieden, dass der Dichtring entlang des Rohres verschoben werden kann. So wird z.B. auch dann, wenn durch das Rohr ein Medium unter hohem Druck strömt und unter hohem Druck stehende Flüssigkeit an den Dichtring gelangt, vermieden, dass der Dichtring am Rohr entlang verschoben wird und so zu Undichtigkeiten führt.

In einer bevorzugten Ausführungsform der Erfindung ist das Rohr ein Kraftstoffrücklauf, der mit einem Kraftstoffinjektor einer Verbrennungskraftmaschine verbunden ist. Das erfindungsgemäß ausgebildete Einsatzteil kann aber auch in allen anderen Bereichen, in denen Rohre zum Einsatz kommen, verwendet werden. So lässt es sich zum Beispiel auch zur Verbindung von Rohren in der Sanitärtechnik, der Medizintechnik oder der Energie- und Anlagentechnik einsetzen.

### Kurze Beschreibung der Zeichnungen

Ausführungsbeispiele der Erfindung sind in den Zeichnungen dargestellt und in der nachfolgenden Beschreibung näher erläutert.

Es zeigen
- Figur 1: ein erfindungsgemäß ausgebildetes Einsatzteil, das in ein Rohrende eingesetzt ist,
- Figur 2: eine Fixierung des Einsatzteiles im Rohr durch Kaltumformung,
- Figur 3: ein erfindungsgemäß ausgebildetes Einsatzteil in einem Rohr mit Kunststoffummantelung.

### Ausführungsformen der Erfindung

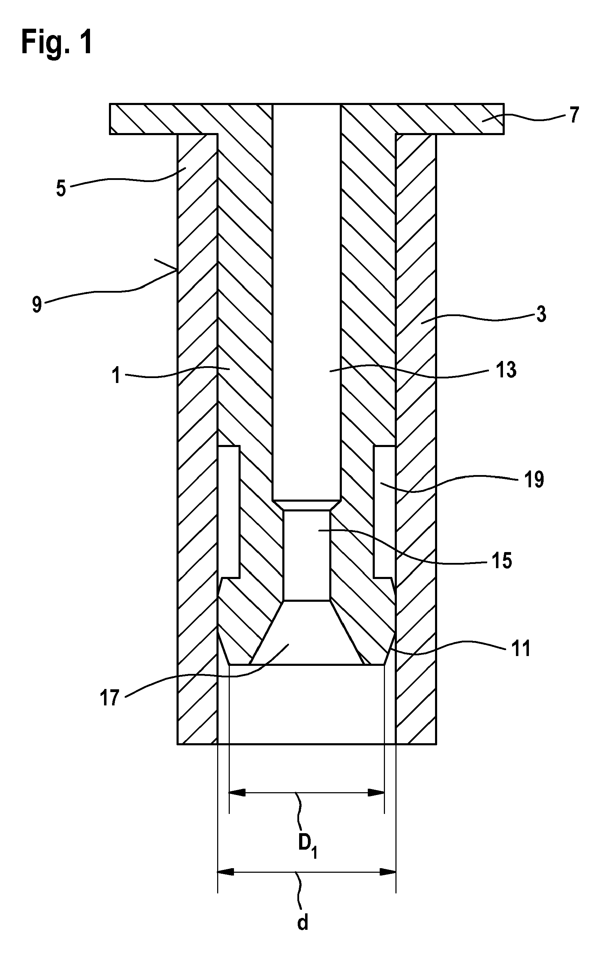

In Figur 1 ist ein erfindungsgemäß ausgebildetes Einsatzteil in einem Rohrende dargestellt.

Ein Einsatzteil 1 ist in einem Rohr 3 an seinem Rohrende 5 eingesetzt. Am Einsatzteil 1 ist ein Bund 7 ausgebildet. Der Bund 7 ist dabei so ausgebildet, dass dieser über die Außenfläche 9 des Rohres 3 hinausragt. Hierdurch bildet der Bund 7 nach der Fixierung des Einsatzteiles 1 im Rohr 3 einen Flansch.

Da das Einsatzteil 1 unabhängig vom Rohr 3 gefertigt wird, ist es möglich, das Einsatzteil 1 mit hoher Maßgenauigkeit zu fertigen. Hierzu wird das Einsatzteil 1 vorzugsweise spanend gefertigt. Auch lässt sich die Länge des Rohres 3 bis zum Abschluss durch den Bund 7 maßgenau einstellen, da das Einsatzteil 1 unterschiedlich weit in das Rohr 3 eingeschoben und an der entsprechenden Position fixiert werden kann.

Um das Einsatzteil 1 in das Rohr 3 einschieben zu können, ist am Einsatzteil 1 eine Fase 11 ausgebildet. Durch die Fase 11 hat das Einsatzteil 1 an seinem Ende einen kleineren Durchmesser D₁ als der Innendurchmesser d₁ des Rohres 3. Aufgrund des kleineren Durchmesser D₁ des Einsatzteiles 1 an dem Ende, mit dem das Einsatzteil 1 in das Rohr 3 eingeschoben wird, wird die Montage des Einsatzteiles 1 im Rohr 3 erleichtert.

Damit eine fließfähige Substanz aus einem weiteren Bauteil, welches mit dem Rohr 3 verbunden wird, in das Rohr 3 strömen kann oder eine fließfähige Substanz aus dem Rohr 3 in das weitere Bauteil strömen kann, ist im Einsatzteil 1 vorzugsweise ein Kanal 13 ausgebildet. Der Kanal 13 kann dabei jede beliebige Innengeometrie aufweisen. So wirken z.B. eine Verkleinerung des Kanalquerschnittes und eine sich daran anschließende Aufweitung des Kanalquerschnittes als Drosselelement. Die Aufweitung des Kanalquerschnittes wird dabei vorzugsweise so gewählt, dass der Kanalquerschnitt vor und hinter der Verkleinerung gleich groß ist. Weiterhin ist es z.B. auch möglich, den Durchmesser des Kanals 13 in Strömungsrichtung gesehen zu erweitern. Die Erweiterung des Kanalquerschnittes in Strömungsrichtung wirkt als Diffusor. Das Drosselelement ist zum Beispiel eine Blende oder eine Drossel. Eine Blende ist dabei mit einer plötzlichen Durchmesserverengung ausgebildet, so dass ein scharfkantiger Übergang vom Rohrdurchmesser auf den Blendendurchmesser ausgebildet ist. Eine Drossel weist demgegenüber eine definierte Einlaufgeometrie auf.

Bei dem in Figur 1 dargestellten Einsatzteil 1 ist im Kanal 13 eine Durchmesserverengung 15 ausgebildet, die als Drosselelement wirkt. An der dem Rohr 3 zugewandten Seite ist am Einsatzteil 1 eine konische Durchmessererweiterung 17 ausgebildet. Bei einer Strömungsrichtung der fließfähigen Substanz aus einem Bauteil in das Rohr 3 wirkt die Durchmessererweiterung 17 als Diffusor. Eine definierte Innengeometrie, zum Beispiel eine Drossel oder eine Blende, dient zur Regelung der Druckverhältnisse und der Strömungsgeschwindigkeiten der fließfähigen Substanz in Strömungsrichtung gesehen vor und nach dem Einsatzteil. Eine Drosselung bewirkt dabei beispielsweise einen Energie- und Druckverlust. Auf die Flächen am Einsatzteil 1, die quer zur Strömungsrichtung ausgerichtet sind, wirkt bei einer Strömung aus dem Rohr 3 in das weitere Bauteil eine Druckkraft, die das Einsatzteil 1 aus dem Rohr 3 herausschieben würde, wenn dieses nicht im Rohr 3 fixiert ist.

Um zu vermeiden, dass im Bereich des Einsatzteiles 1 Gas oder Flüssigkeit aus dem Rohr 3 austritt, ist es bevorzugt, das Einsatzteil 1 gas- oder flüssigkeitsdicht im Rohr 3 zu fixieren. Die erforderliche Dichtheit kann zum Beispiel durch eine entsprechend feste Verpressung des Einsatzteiles 1 im Rohr 3 erzielt werden. Weiterhin ist es auch möglich, zusätzlich ein Dichtmittel, welches gegen das abzudichtende Medium stabil ist und das zwischen dem Einsatzteil 1 und dem Rohr 3 aufgenommen wird, einzusetzen. Als Dichtmittel eignen sich zum Beispiel Dichtpaste, eine Dichtschnur oder ein Dichtring.

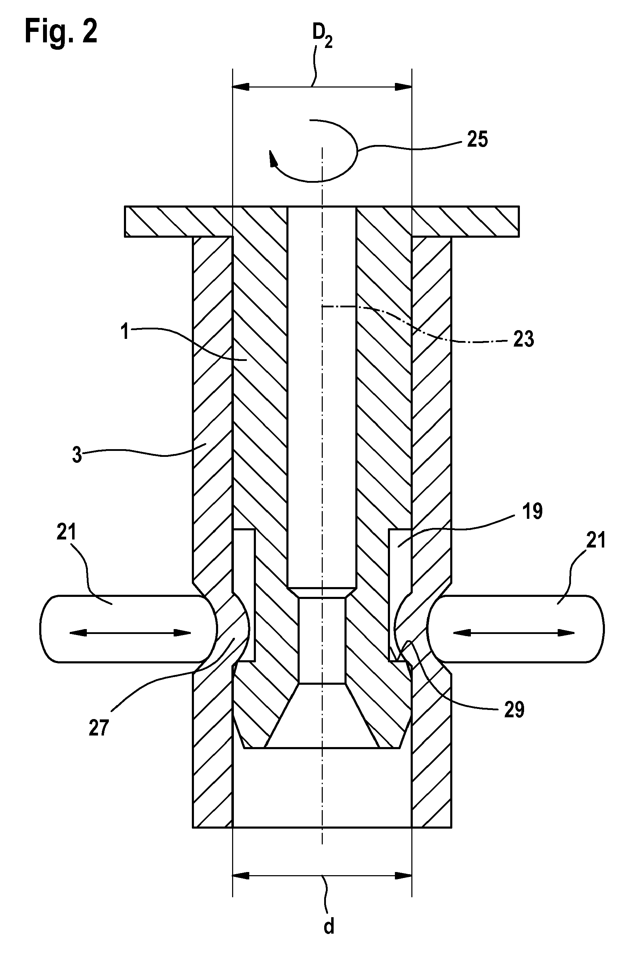

Um das Einsatzteil 1 im Rohr 3 zu fixieren, ist am Einsatzteil 1 eine Nut 19 ausgebildet. Die Nut 19 erstreckt sich in Umfangsrichtung über den Außenumfang des Einsatzteiles 1. Zur Fixierung des Rohres 3 am Einsatzteil 1 wird die Wand des Rohres 3 in die Nut 19 eingepresst. Dies ist in Figur 2 dargestellt.

Um das Einsatzteil 1 im Rohr 3 zu befestigen, wird im Bereich der Nut 19 im Einsatzteil 1 ein Werkzeug 21 gegen das Rohr 3 gepresst. Als Werkzeug 21 eignen sich z.B. Rollen aus einem Werkzeugstahl mit entsprechenden, geeigneten Festigkeitseigenschaften. Die Druckkraft, mit der das Werkzeug 21 gegen das Rohr 3 gedrückt wird, ist so groß, dass sich das Rohr 3 durch die einwirkende Kraft verformt. Hierdurch wird die Wandung des Rohres 3 in die Nut 19 gepresst. Das Einsatzteil 1 wird auf diese Weise fixiert. Eine gleichmäßige Fixierung des Einsatzteiles 1 wird z.B. dadurch erreicht, dass das Rohr 3 mit dem darin aufgenommenen Einsatzteil 1 um die Rohrachse 23 rotiert, während das Werkzeug 21 gegen das Rohr 3 gepresst wird. Die Rotationsbewegung des Rohres 3 mit dem Einsatzteil 1 ist durch einen Pfeil 25 dargestellt. Die Position des Bereiches am Rohr 3, der durch das Werkzeug 21 umgeformt wird, lässt sich so zur Nut hin ausrichten, dass eine Vorspannung des Einsatzteiles 1 im Rohr 3 erzeugt werden kann. Die Vorspannung wird dadurch erreicht, dass die umgeformte Rohrwandung 27 gegen eine Seitenfläche 29 der Nut 19 gepresst wird. Die Kraft, mit der die umgeformte Rohrwandung 27 auf die Seitenfläche 29 presst, liefert das Maß für die Vorspannung des Einsatzteiles 1 im Rohr 3. Durch das Aufbringen der Vorspannung wird z.B. vermieden, dass auch bei regelmäßigen Druckwechseln im Rohr 3 das Einsatzteil 1 nicht gegenüber dem Rohr 3 verschoben wird, sondern eine feste Positionierung gewährleistet ist.

Statt durch Einrollen kann die Kaltumformung auch durch Rundkneten, Einstichhämmern oder Magnetumformen erfolgen. Um die umgeformte Rohrwandung 27 durch Einstichhämmern zu erzeugen, sind die Werkzeuge 21 Hämmer, die gegen die Wandung des Rohres 3 schlagen und so die umgeformte Rohrwandung 27 erzeugen.

Um die umgeformte Rohrwandung 27 durch Rundkneten zu erzeugen, werden die Werkzeuge 21 konzentrisch um das Werkstück angeordnet. Die Werkzeuge 21 oszillieren dabei mit Hochfrequenzen und geringem Hub. Die Hubfrequenz beträgt dabei vorzugsweise zwischen 1500 und 10000 min⁻¹. Hübe, die dabei realisiert werden, liegen zwischen 0,2 und 5 mm. Gleichzeitig mit den oszillierenden Bewegungen der Werkzeuge 21 übt das Rohr 3 mitsamt dem Einsatzteil 1 eine Rotationsbewegung 25 um die Rohrachse 23 aus. Durch die Rotationsbewegung 25 wird vermieden, dass Material der Wandung des Rohres 3 zwischen die Werkzeuge 21 fließt.

Neben der Fixierung des Einsatzteiles 1 im Rohr 3 durch ein Kaltumformverfahren ist es auch möglich, am Einsatzteil 1 ein Außengewinde anzubringen und im Rohr 3 ein Innengewinde. Das Einsatzteil 1 wird dann durch eine Verschraubung im Rohr 3 fixiert. Weiterhin ist es auch möglich, das Einsatzteil 1 im Rohr 3 durch eine Lötverbindung, eine Schweißverbindung oder eine Klebverbindung zu fixieren. Weiterhin kann das Einsatzteil 1 auch durch eine Pressverbindung im Rohr 3 fixiert werden. Wenn das Einsatzteil 1 durch eine Pressverbindung im Rohr 3 fixiert wird, ist vorzugsweise der Außendurchmesser D₂ etwas größer als der Innendurchmesser d₁ des Rohres 3. Um das Einsatzteil 1 in das Rohr 3 einsetzen zu können, wird das Rohr 3 vorzugsweise erwärmt, damit sich dieses aufweitet. Nach dem Abkühlen schrumpft das Rohr 3 wieder um das Einsatzteil 1 herum und presst so das Einsatzteil 1 fest. Die Pressverbindung ist jedoch nur für geringe Drücke im Rohr 3 geeignet, da bei hohen Drücken die Möglichkeit besteht, dass das eingepresste Einsatzteil 1 aus dem Rohr 3 heraus geschoben wird.

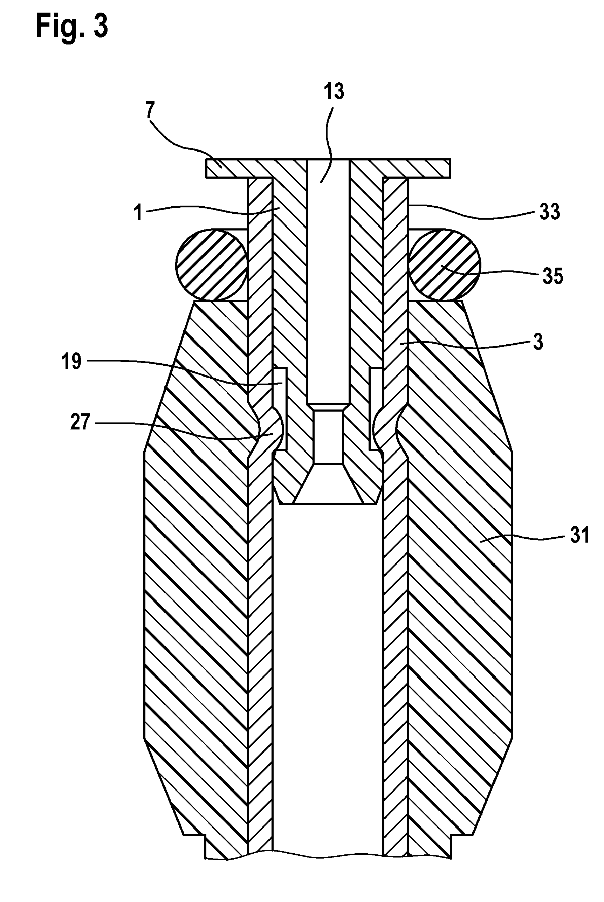

In Figur 3 ist ein erfindungsgemäß ausgebildetes Einsatzteil in einem Rohr mit Kunststoffummantelung dargestellt.

Für einige Einsatzzwecke, z.B. wenn das Rohr 3 als Kraftstoffrücklauf eingesetzt wird, der mit einem Kraftstoffinjektor verbunden ist, wird das Rohr 3 mit einer Kunststoffummantelung 31 versehen. Die Kunststoffummantelung 31 ist dabei so ausgebildet, dass zwischen dem Bund 7, Einsatzteil 1 und der Kunststoffummantelung 31 eine Nut 33 ausgebildet ist. In der Nut 33 ist ein Dichtelement 35 aufgenommen. Das Dichtelement 35 ist z.B. ein O-Ring. Durch das Dichtelement 35 wird eine flüssigkeits- oder gasdichte Verbindung mit dem hier nicht dargestellten weiteren Bauteil erzielt. Hierzu wird das Dichtelement 35 in der Nut 33 zwischen dem Rohr 3 und dem weiteren Bauteil eingepresst, so dass keine Flüssigkeit oder kein Gas am Dichtelement 35 vorbeiströmen kann. Die Kunststoffummantelung 31 steht dabei in der Regel in einem funktionellen Zusammenhang oder als Verbindungsgeometrie zu anderen Schnittstellen.

Zur Erzeugung der Kunststoffummantelung 31 wird das Rohr 3 vorzugsweise in eine Spritzgussform eingelegt. Die Spritzgussform ist dabei so gegen das Rohr 3 abgedichtet, dass kein Kunststoff entlang dem Rohr austreten kann. Nach dem Einlegen des Rohres 3 in die Spritzgussform und dem Schließen der Form wird Kunststoff in die Form eingespritzt.

Dieser umgibt das Rohr und bildet so die Kunststoffummantelung 31. Damit der Kunststoff für die Kunststoffummantelung 31 schnell erstarrt, ist es bevorzugt, dass die Spritzgussform gekühlt werden kann. Sobald der Kunststoff an der Oberfläche erstarrt ist, kann das Rohr aus der Spritzgussform entnommen werden, ohne dass sich die Form der Kunststoffumspritzung 31 noch ändert. Der Spritzgussprozess als solcher, mit dem die Kunststoffummantelung 31 erzeugt wird, ist dem Fachmann bekannt und nicht Gegenstand der vorliegenden Erfindung.

Das erfindungsgemäß ausgebildete Einsatzteil kann aus jedem beliebigen Werkstoff gefertigt sein. Die Werkstoffauswahl richtet sich dabei nach dem Anwendungsbereich und den Anforderungen an das Einsatzteil. Geeignete Werkstoffe sind zum Beispiel Metalle, Kunststoff oder Holz. Bevorzugt wird das Einsatzteil aus Metall oder Kunststoff gefertigt.

## Patentansprüche

1. Vorrichtung zum Verbinden eines Rohres (3) mit einem weiteren Bauteil, wobei am Rohrende (5) ein Flansch vorgesehen ist, der zur Abstützung eines Überwurfelementes dient, welches mit dem weiteren Bauteil kraft- oder formschlüssig verbunden werden kann, **dadurch gekennzeichnet, dass** der Flansch als Bund (7) eines Einsatzteiles (1) ausgebildet ist, welches in das Rohr (3) eingesetzt wird und mit dem Rohr (3) kraft- oder formschlüssig verbunden wird.

2. Vorrichtung nach Anspruch 1, **dadurch gekennzeichnet, dass** durch den am Einsatzteil (1) ausgebildeten Flansch ein Raum für ein Dichtelement (35) gebildet und begrenzt wird und das Dichtelement (35) an seiner Position gehalten wird, um eine flüssigkeits- oder gasdichte Verbindung des Rohres (3) mit dem Bauteil zu erhalten.

3. Vorrichtung nach Anspruch 1, **dadurch gekennzeichnet, dass** im Einsatzteil (1) ein Kanal (13) mit einer beliebigen Innengeometrie ausgebildet ist, welcher von einer fließfähigen Substanz, vorzugsweise einem Gas oder einer Flüssigkeit, durchströmt werden kann.

4. Vorrichtung nach Anspruch 2, **dadurch gekennzeichnet, dass** die Innengeometrie des Kanals (13) so ausgeführt ist, dass diese zumindest ein Drosselelement, eine Blende und/oder einen Diffusor umfasst.

5. Vorrichtung nach einem der Ansprüche 1 bis 3, **dadurch gekennzeichnet, dass** das Einsatzteil (1) durch ein spanendes Fertigungsverfahren hergestellt wird.

6. Vorrichtung nach einem der Ansprüche 1 bis 4, **dadurch gekennzeichnet, dass** das Einsatzteil (1) durch eine Pressverbindung, eine Klebverbindung, eine Schweißverbindung, eine Lötverbindung, eine Schraubverbindung, einen Kaltumformprozess oder eine Kombination von zwei oder mehr der Verbindungsarten im Rohr (3) fixiert wird.

7. Vorrichtung nach einem der Ansprüche 1 bis 5, **dadurch gekennzeichnet, dass** zur Fixierung des Einsatzteiles (1) im Rohr (3) am Außenumfang des Einsatzteils (1) eine Nut (19) ausgebildet ist, in die die Wandung des Rohres (3) durch einen Kaltumformprozess eingepresst wird.

8. Vorrichtung nach Anspruch 6, **dadurch gekennzeichnet, dass** der Kaltumformprozess, mit dem die Wandung des Rohres (3) in die Nut (1) am Außenumfang des Einsatzteiles (1) eingepresst wird, Einrollen, Rundkneten oder Einstichhämmern ist.

9. Vorrichtung nach einem der Ansprüche 1 bis 7, **dadurch gekennzeichnet, dass** das Rohr (1) von einer Kunststoffummantelung (31) umgeben ist, wobei die Kunststoffummantelung (31) so ausgeführt ist, dass zwischen der Kunststoffummantelung (31) und dem Bund (7) am Einsatzteil (1) eine Nut (33) ausgebildet wird, in der das Dicht-element (35) aufgenommen ist.

10. Vorrichtung nach einem der Ansprüche 1 bis 8, **dadurch gekennzeichnet, dass** das Rohr (3) ein Kraftstoffrücklauf ist, der mit einem Kraftstoffinjektor einer Verbrennungskraftmaschine verbunden ist.
